# EUROPEAN PATENT APPLICATION

(11) **EP 1 826 281 A1**
(43) Date of publication of application: **29.08.2007**
(21) Application number: 06110409.7
(22) Date of filing: 24.02.2006
(51) Int. Cl.: C21B 13/00, C21B 13/14

(54) **Method for producing molten pig iron or steel pre-products in a melter gasifier**

(71) Applicant: PAUL WURTH S.A., 1122 Luxembourg (LU)
(72) Inventor: Thirion, Claude, 13310 ST. Martin de Crau (FR); Roth, Jean-Luc, 57100 Thionville (FR); Cortina, Christian, 3937 Mondercange (LU)
(74) Representative: Kihn, Pierre Emile Joseph

(57) **Abstract**

The invention relates to a process for producing molten pig iron or steel pre-products from iron oxide containing products contaminated by zinc which process includes pre-reducing said iron oxide containing products contaminated by zinc by means of reducing gas so as to obtain pre-reduced material, completely reducing said pre-reduced material and smelting said completely reduced material in a melter gasifier so as to obtain molten slag, pig iron or steel pre-products and zinc containing gas wherein said gas is withdrawn from the melter gasifier at a temperature between 1000 and 1400 °C and substantially all the gas is cooled to between 50°C and 700°C to eliminate at least 80 % of the Zinc contained in said gas, wherein the said cooled gas is then reheated to about 700-850° C and used as a reducing gas to obtain said pre-reduced material.

## Description

### Introduction

The present invention relates to a method for producing molten pig iron or steel pre-products in a melter gasifier from iron oxide containing products contaminated by zinc.

A typical smelting-reducing method is disclosed a.o. in US 4,728,360 and EP 0368 835A1, in which iron ore and coal are directly used without carrying out a pre-treating process so as to produce hot metal. Such a process is commercialized i.e. by Voest-Alpine Industrieanlagen GmbH & Co under the trademark "Corex".

In the method of EP 0368 835A1, the iron ore and the ordinary coal are directly used, and the pre-treating processes such as sintering process and the coking process are omitted. Therefore, compared with other pig iron manufacturing processes such the as blast furnace process, the process and facilities are simplified. In FIG. 1 of EP 0368 835, the facility for carrying out the method is shown and includes: a melter gasifier 11 for converting the coal into a gas and for melting the reduced iron ore; a pre-reduction furnace 12 for indirectly reducing the iron ore by using the reducing gas generated in the melter gasifier 11; and other auxiliary facilities.

The operating temperature of the melter gasifier is 1000-1150° C, which is the condition of the complete decomposition of the tar component of the coal. The pre-reduction furnace however is maintained at an operating temperature of 800-850° C. which is the optimum condition for the direct reduction of the iron ore. Therefore, in order to lower the high temperature of the gas of the melter gasifier to 800-850° C, a part of the gas (usually about 20%) which is produced in the melter gasifier is cooled down by a cooling system17, and is subjected to a pressure stepup in a compressor 18, before being mixed with the remaining gas and sent to the pre-reduction furnace. The dust that is produced in the melter gasifier is separated by a cyclone 14, and passes through a dust recycling system 15. Then the dust is reinjected into the melter gasifier, thereby minimizing the losses of the fuel and the raw material.

However, the above-described method has the a.o. the disadvantage that it cannot be used for iron ores or other iron oxide containing products, which are contaminated by zinc.

### Object of the invention

The object of the present invention is to provide a method for producing molten pig iron or steel pre-products in a melt-down gasifier from iron oxide containing products contaminated by zinc.

### General description of the invention

In order to overcome the abovementioned problems, the present invention provides a process for producing molten pig iron or steel pre-products from iron oxide containing products contaminated by zinc. Said process includes pre-reducing said iron oxide containing products contaminated by zinc by means of reducing gas so as to obtain pre-reduced material, completely reducing said pre-reduced material and smelting said completely reduced material in a melter gasifier so as to obtain molten slag, pig iron or steel pre-products and zinc containing gas wherein said gas is withdrawn from the melter gasifier at a temperature between 1000 and 1400 °C and substantially all the gas is cooled to between 50°C and 700°C to eliminate at least 80 % of the Zinc, contained in said gas, wherein the said cooled gas is then reheated to about 700-850° C and used as a reducing gas to obtain said pre-reduced material.

The method according to the invention allows removing a large fraction of the zinc from the process.

During the research that led to the present invention, it has been found that the zinc does not pass into the molten pig iron, nor is it evacuated with the exhaust gas, it is recycled in the system and will hinder the good functioning of the apparatus and the method. Indeed, the zinc vaporized in the melter gasifier does not remain in the vapour phase and is thus removed from the system by the exhaust gas from the pre-reduction furnace. Surprisingly, it has been found that the zinc vapours tend to condensate when they come in contact with the cold iron ore fed at the top of the pre-reduction furnace. The condensated zinc vapours have a tendency to "bake" the particle of ore together and hinder the passage of the reducing gas through the pre-reduction furnace.

In the method according to the invention, the gas is withdrawn from the melter gasifier and is cooled down so that the zinc is eliminated from the gas before the gas is reheated and introduced into the prereduction furnace.

According to a preferred embodiment, the gas issued from the melter gasifier is cooled so that at least 90 % and preferably at least 95 % of the zinc is eliminated from the gas. The gas is cooled down to at least 700°C. In preferred embodiment, the gas is cooled in two steps, first in a heat exchanger (to about 700 °C and then in a quench cooler to about 50°C.

Preferably, the gas issued from the melter gasifier is cooled at a rate of at least 250°C / min, preferably at least 400°C / min.

Advantageously, the gas issued from the melter gasifier is de-dusted before and/or after cooling by passing through a cyclone filter or a Venturi scrubber so as to eliminate the solid particles contained in said gas.

The cooled gas is then reheated preferably from 720°C to 820°C and more preferably from 730°C to 800°C and in particular form 740°C to 760°C.

The terms iron oxide containing products contaminated by zinc as used in the present invention are defined as iron ore containing at least 0.05 % zinc mostly under the form of oxides, iron oxides containing waste products of the steel industry such as dusts or sludges which are produced in the electric or converter steel mills, residual materials that are separated by waste gas cleaning plants from the waste gas as dusts or sludge or mixtures thereof.

Typical compositions of dusts and sludge containing heavy metal from electric or converter steel mills are shown in the following table.

**Table 1**

| | Fe (%) | Zn (%) | Pb (%) | C (%) | H₂O (%) |
|---|---|---|---|---|---|
| Dusts | 20-30 | 20-35 | 1-10 | 1-2 | - |
| Sludges | 20-30 | 2-8 | 1-5 | - | 30-40 |

The percentage of zinc in the products that can be treated by the process ranges from about 0.02 % to about 10%.

### Detailed description with respect to the figures

The present invention will be more apparent from the following description of a not limiting embodiment with reference to the attached drawings, wherein
- Fig.1:: is a schematic illustration showing the conventional smelting reduction system for manufacturing a hot metal from an iron ore;
- Fig.2:: is a schematic illustration showing a first preferred embodiment of the smelting reduction system according to the present invention; and
- Fig.3:: is a schematic illustration showing a second preferred embodiment of the smelting reduction system according to the present invention.
- Fig.4:: is a schematic illustration showing a third preferred embodiment of the smelting reduction system according to the present invention.

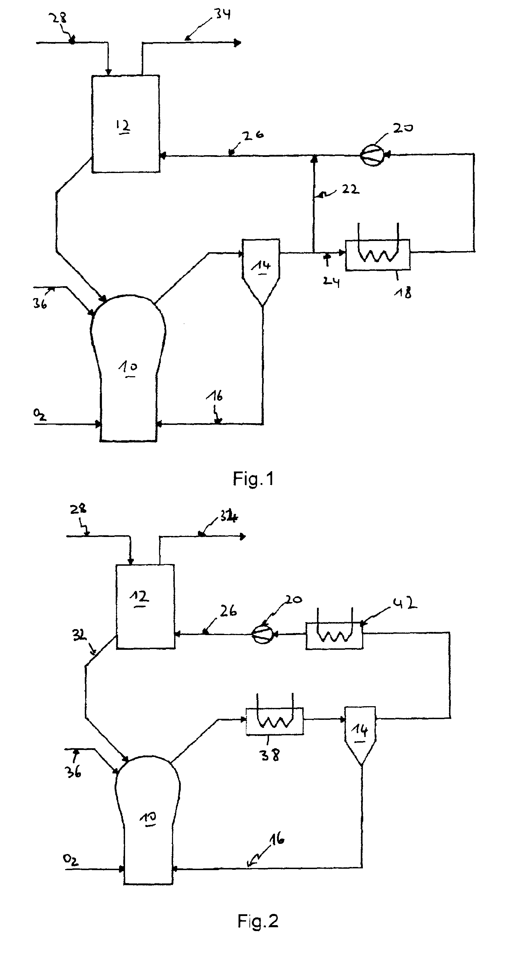

FIGS. 2, 3 and 4 illustrate three embodiments of the smelting reduction system according to the present invention wherein like elements are identified by like reference numerals in the various figures of the drawings.

As shown in FIG. 1, the smelting reduction system includes: a melter gasifier 10 for gasifying the coal and for melting the reduced ore; a pre-reduction furnace 12 for indirectly reducing an iron ore by utilizing the discharge gas of the melter gasifier 10; a cyclone 14 for receiving the discharge gas from the melter gasifier 10 to capture particles from the discharge gas so as to send the particles back to the smelter gasifier 10 through a recycling system 16 and the cleaned discharge gas to the pre-reduction furnace 12; a cooling system 18 for receiving a part of the discharge gas of the cyclone 14, to cool it; a compressor 20 for compressing the cooled reduction gas before it is injected in the pre-reduction furnace 12.

The discharge gas, which is produced by the melter gasifier 10 has a high temperature of 1000-1400° C. This discharge gas is produced through the complete decomposition of a large amount of the tar which is the volatile material contained in the coal. However, the optimum temperature in the pre-reduction furnace 12 is between 800 and 850° C, and therefore, the discharge gas of the melter gasifier is divided in two streams, the first stream (about 80% of the total discharge gas) is lead through a first discharge gas conduct 22 to the pre-reduction furnace, the second stream (about 20% of the produced reducing gas) is lead through a second discharge gas conduct 24 to the cooling system 18 so as to cool it. Then the cooled gas is compressed by the compressor 20, and then the cooled and compressed gas is mixed with the first stream of discharge gas to form the reducing gas and injected through a reduction gas supply conduct 26 in the pre-reduction furnace. The temperature (and the pressure) of said reducing gas is adjusted by mixing of the two discharge gas streams.

The discharge gas of the melter gasifier 10 is composed of 60-65% of CO, 25-30% of H₂, 3-5% of CO₂ and 2-4% of N₂.

Figs. 2, 3 and 4 show a smelting reduction system to which the present invention is applied.

Iron-oxide-containing products which are contaminated by zinc are introduced at the top of the pre-reduction furnace 12 (usually a shaft furnace or a multiple hearth furnace) through an oxide supplying tube 28. The iron-oxide-containing products contaminated by zinc travel through the pre-reduction furnace 12 and are pre-reduced by the reduction gas supplied to the pre-reduction furnace through a reduction gas supply conduct 26 at the bottom of the pre-reduction furnace. The pre-reduced oxides are then discharged through a pre-reduced oxide discharge tube 32 at the bottom of the pre-reduction furnace 12 and fed to the melter-gasifier 10 whereas the spent reducing gas is discharged through the top of the pre-reduction furnace via a spent reducing gas discharge conduct 34.

Carbon-containing products generally coal are introduced into the melter gasifier through a coal supply tube 36 at the top the melter gasifier 10. An oxygen-containing gas is supplied to the lower part of the melter gasifier 12. The pre-reduced material is completely reduced and the completely reduced material is then smelted so as to obtain molten slag, pig iron or steel pre-products and zinc containing reducing gas laden with dust particles.

The molten slag and pig iron or steel pre-products are tapped at regular intervals from the melter gasifier.

The melter gasifier 10 is connected to a cooling system 38 through a first discharge gas circulating tube 40. The cooling system 38 communicates with a heating system 42 and a compressor 20 through a gas circulating tube. The cooled and recompressed gas is then injected into the pre-reduction furnace through the reduction gas supply conduct 26.

In the first preferred embodiment of the present invention as shown in Fig. 2, in order to eliminate the vapours of zinc from the gas which is produced by the melter gasifier 10, substantially the entirety of the gas is passed through a cooling system 38 and is cooled down so that at least 90% of the zinc is eliminated from the gas. The zinc vapours condensate to form a solid inside the cooling system 38 and can thus be recuperated. The gas is then passed through a cyclone 14 and reheated in the heating system 42 and compressed in the compressor 20 before being injected in the pre-reduction furnace.

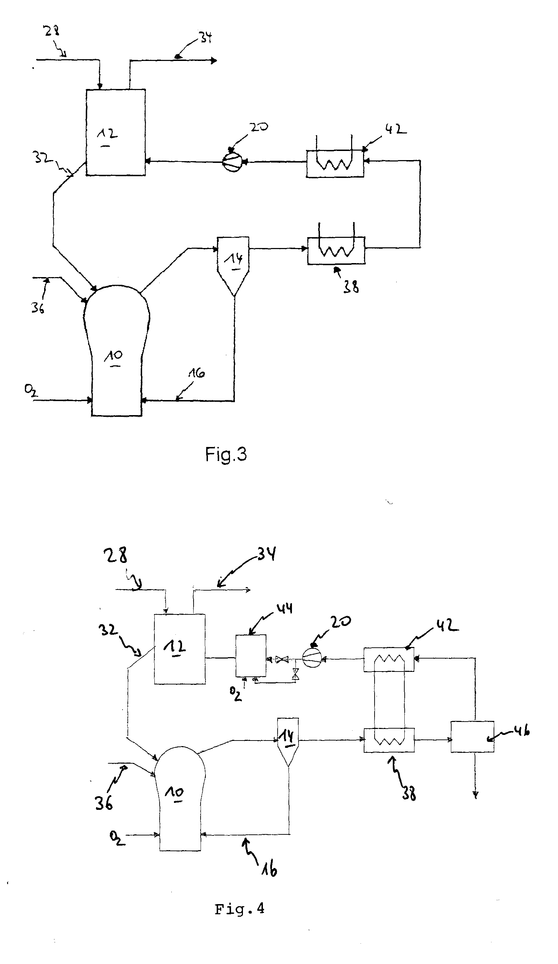

In a second preferred embodiment as shown in Fig. 3, substantially the entirety of the gas issued from the melter gasifier 10 is first passed through a cyclone 14 to eliminate any solid particles from the gas and then the gas is passed through a cooling system 38 so as to eliminate at least 90% of the zinc contained therein. The zinc vapours condensate to form a solid inside the cooling system and can thus be recuperated. The gas is then reheated in the heating system 42 and compressed in the compressor 20 before being injected in the pre-reduction furnace.

In other words, according to the present invention, substantially the entirety of the gas from the melter gasifier is cooled down to a temperature where at least 80% of the zinc contained in the gas is eliminated from the gas. The solids contained in the gas may be eliminated in a cyclone either before the gas is cooled or after the gas has been cooled. The solids recuperated by the cyclone 14 are then recycled to the melter gasifier through a solids recycling system 16.

The gas is preferably cooled to about 50°C -700 ° C. As this temperature is below the optimum temperature of the pre-reduction furnace, the gas is reheated (and re-pressurized) before it is injected in the pre-reduction furnace.

The major change with regard to the prior art is that not only a small part of the discharge gas is cooled and than mixed with the remaining gas to lower the temperature of the gas to be injected in the pre-reduction furnace but in this case substantially the entirety of the discharge gas is passed through a cooling system and is cooled down to between 50°C and 700°C i.e well below the optimum temperature of the pre-reduction furnace. The aim is to eliminate more than about 80% (preferably more than 90% and most preferably more than 94%) of the Zinc vapours contained in the discharge gas. The cooled down discharge gas is reheated to about 700-850°C before it is injected into the pre-reduction furnace. During this cooling of the discharge gas, the zinc contained in the form of zinc vapours is condensed out of the gas stream and may be eliminated from the system.

The discharge gas is either passed through a cyclone (or an equivalent apparatus like a Venturi scrubber) before or after it is cooled in the cooling apparatus so as to clean the discharge of any dust particles. The dust particles are then recycled to the melter gasifier. It is to be noted that even if the discharge gas is passed thorough a cyclone before it is cooled, only a minor fraction (maximum about 10 %) about of the zinc will be eliminated at this stage.

In the third preferred embodiment, as shown in Fig. 4, the gas is evacuated from the melter gasifier and are passed through a cyclone 14 to eliminate any solid particles from the gas. The cleaned gas is passed through a cooling system 38 so as to eliminate at least 90% of the zinc contained therein. The zinc vapours condensate to form a solid inside the cooling system and can thus be recuperated. The gas which has been quenched and cooled down to about 50°C is then reheated in the heating system 42 and compressed in the compressor 20 before being injected in the pre-reduction furnace. In this embodiment, the cooler 38 and the heater 42 are constructed as a heat exchanger, i.e. the energy from the cooler is used to reheat the gas in the heater 42 after the zinc has been removed. In this particular embodiment, the gas is passed into a gas cleaner 46 (quench) after having passed through the cooler 38 so as to remove any solids (dust or sludge) or any remaining zinc particles contained in the gas before the gas is passed into the heater 42. After the gas has passed the compressor, one part of the gas is burned with oxygen in a second heater 44 to the temperature required in the pre-reduction furnace. The embodiment described in relation to Fig. 4 is particularly efficient as far as energy consumption is concerned. Indeed the energy from the cooling of the hot gas is used to reheat the gas after the zinc has been removed and a part of the gas is burnt with oxygen to reheat the gas to required temperature.

It has been found that the temperatures of the pre-reduction furnace should preferably be lower than the traditionally used 850°C so as to avoid that the zinc is vaporized in the pre-reduction furnace. In order to work under optimum conditions, the pre-reduction should be operated at temperatures from 700-800°C and preferably from 740-760°C. Surprisingly, even at such low temperatures, an almost complete (more than 90%) pre-reduction of the iron oxide containing products could be achieved without however removing the zinc.

**Table of references**

| | |
|---|---|
| 10 | melter gasifier |
| 12 | pre-reduction furnace |
| 14 | cyclone |
| 16 | recycling system for particles |
| 18 | cooling system for a part of the gas |
| 20 | compressor |
| 22 | first discharge gas conduct |
| 24 | second discharge gas conduct |
| 26 | reduction gas supply conduct |
| 28 | oxide supplying tube |
| 32 | pre-reduced oxide discharge tube |
| 34 | spent reducing gas discharge conduct |
| 36 | coal supply tube |
| 38 | Cooling system |
| 42 | Heating system |
| 44 | Second heater |
| 46 | Gas cleaner |

## Claims

1. Process for producing molten pig iron or steel pre-products from iron oxide containing products contaminated by zinc which process includes pre-reducing said iron oxide containing products contaminated by zinc by means of reducing gas so as to obtain pre-reduced material, completely reducing said pre-reduced material and smelting said completely reduced material in a melter gasifier so as to obtain molten slag, pig iron or steel pre-products and zinc containing gas wherein said gas is withdrawn from the melter gasifier at a temperature between 1000 and 1400 °C and substantially all the gas is cooled to between 50°C and 700°C to eliminate at least 80 % of the Zinc contained in said gas, wherein the said cooled gas is then reheated to about 700-850° C and used as a reducing gas to obtain said pre-reduced material.

2. The process according to claim 1, wherein the gas issued from the melter gasifier is cooled so that at least 90 % and preferably at least 94 % and in particular at least 99% of the zinc is eliminated from said gas.

3. The process according to claim 1 or 2, wherein the gas issued from the melter gasifier is cooled at a rate of at least 250°C / min, preferably at least 400°C / min

4. The process according to any of the preceding claims, wherein the gas issued from the melter gasifier is cooled is cooled to between 500°C and 650° preferably from 500°C to 600°C and more preferably from 500°C to 550°C and in particular form 520°C to 540°C.

5. The process according to any of the preceding claims, wherein the cooled gas is reheated from 720°C to 820°C and more preferably from 730°C to 800°C and in particular form 740°C to 760°C.

6. The process according to any of the preceding claims, wherein the cooled gas is reheated by burning a part of said gas and using the heat generated by said burnt gas to heat the remaining gas to the required temperature.

7. The process according to any of the preceding claims, wherein the gas issued from the melter gasifier is de-dusted before and/or after cooling.

8. The process according to any of the preceding claims, wherein the iron oxide containing products contaminated by zinc are selected from the group consisting of iron ore containing at least 0.05 % zinc, iron-oxides-containing waste products of the steel industry such as dusts or sludges which are produced in the electric or converter steel mills, residual materials that are separated by waste gas cleaning plants from the waste gas as dusts or sludge or mixtures thereof.
